# EUROPEAN PATENT APPLICATION

(11) **EP 4 574 547 A1**
(43) Date of publication of application: **25.06.2025**
(21) Application number: 24213691.9
(22) Date of filing: 18.11.2024
(51) Int. Cl.: B60L 53/62, B60L 53/67

(54) **METHOD OF DYNAMICALLY DISTRIBUTING OUTPUT POWERS OF CHARGING PILES**

(30) Priority: 14.12.2023 US 202363610182 P; 26.09.2024 CN 202411352706
(71) Applicant: DELTA ELECTRONICS, INC., Taoyuan City 320023 (TW)
(72) Inventor: HSIAO, Chia-Yuan, 320023 Taoyuan City (TW); CHEN, Jyun-Kai, 320023 Taoyuan City (TW); LIU, Shih-Hung, 320023 Taoyuan City (TW); CHEN, Ya-Chen, 320023 Taoyuan City (TW)
(74) Representative: 2K Patentanwälte Blasberg Kewitz & Reichel

(57) **Abstract**

A method of dynamically distributing output powers of charging piles (10-1 to 10-N) configured to perform steps on all charging guns of the charging piles (10-1 to 10-N) in sequence, and the method includes steps of: (a) calculating a charge curve slop, (b) calculating an ideal charge value (Pi) according to a range of the charge curve slop, (c) calculating a distribution margin value (Pm) if a distributed power (Pd) is greater than the ideal charge value (Pi), (d) performing steps (a) to (c), and acquiring an accumulated margin value by accumulating the distribution margin values (Pm) after completing the calculation of the distribution margin value (Pm) of each charging gun, (e) redistributing the output powers of the charging piles (10-1 to 10-N).

## Description

### BACKGROUND

### Technical Field

The present disclosure relates to a method of distributing output power, and more particularly to a method of dynamically distributing output powers of charging piles.

### Description of Related Art

The statements in this section merely provide background information related to the present disclosure and do not necessarily constitute prior art.

With the popularity of electric vehicles, the construction of charging pile systems is also increasing. However, the current charging pile system has some problems when distributing charging power to each electric vehicle.

First of all, the existing algorithm does not adequately consider the actual charging situation of electric vehicles and directly assigns the calculated theoretical power value to each electric vehicle. However, due to the charging characteristics of the battery, the power received by electric vehicles at different charging stages is different. For example, the initial power of fast charging can reach the maximum value, but will gradually decrease as the battery becomes saturated. Therefore, the actual charging power is often lower than the value distributed by the algorithm, resulting in the output power of the charging pile not being fully utilized and the system efficiency decreasing.

Secondly, existing technologies also fail to adjust power distribution according to dynamic changes in the charging process. For example, when some vehicles complete charging and leave, the extra power is not distributed to other electric vehicles waiting to be charged in time, or when the number of electric vehicles to be charged suddenly increases, the input power cannot be quickly increased to meet such requirement. All these limit the performance of the charging pile system.

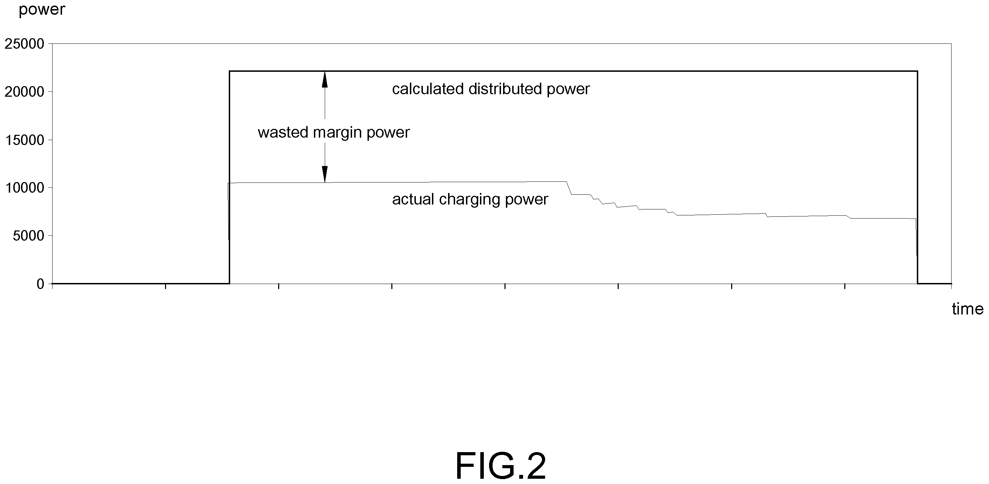

Please refer to FIG. 2, which shows a schematic waveform diagram of a wasted margin power between a distributed charging power calculated by an algorithm and the actual charging power. The original algorithm that does not consider the actual charging power will distribute relatively high power, and the gap (difference) will cause a waste of distribution margin, resulting in later electric vehicles being distributed less charging power.

Therefore, how to design a method of dynamically distributing output powers of charging piles to solve the problems and technical bottlenecks in the existing technology has become a critical topic in this field.

### SUMMARY

An objective of the present disclosure is to provide a method of dynamically distributing output powers of charging piles. Each charging pile at least includes a charging gun. The method performs steps on all charging guns of the charging piles in sequence, and the method includes steps of (a) calculating a charge curve slop, (b) calculating an ideal charge value according to a range of the charge curve slop, (c) calculating a distribution margin value if a distributed power is greater than the ideal charge value, (d) performing steps (a) to (c), and acquiring an accumulated margin value by accumulating the distribution margin values after completing the calculation of the distribution margin value of each charging gun, and (e) redistributing the output powers of the charging piles.

In one embodiment, in step (b) includes a step of: (b') deciding a charge power constant value according to the range of the charge curve slop, and calculating the ideal charge value according to the charge power constant value.

In one embodiment, in step (b') includes steps of (b 1) setting a positive slop value and a negative slop value, (b2) increasing the charge power constant value when the charge curve slop is greater than the positive slop value, (b3) decreasing the charge power constant value when the charge curve slop is less than the negative slop value, and (b4) maintaining the charge power constant value when the charge curve slop is between the positive slop value and the negative slop value.

In one embodiment, in step (b2), the charge power constant value is: k'=min(1,k+k*2*dkW/dt), in step (b3), the charge power constant value is: k'=max(0.01,k+k*0.1*dkW/dt), and in step (b4), the charge power constant value is: k'=k, where k' is an updated charge power constant value, k is the original charge power constant value, dkW/dt is the charge curve slop.

In one embodiment, in step (b), the ideal charge value is: Pi=Pa*(1+k'), where Pi is the ideal charge value, Pa is an actual charge value of the charging gun.

In one embodiment, before step (c) further includes steps of: (c01) determine whether the ideal charge value meets a charge specification of the charging gun, (c02) adjusting the ideal charge value when the ideal charge value does not meet the charge specification of the charging gun, and (c03) maintaining the ideal charge value when the ideal charge value meets the charge specification of the charging gun.

In one embodiment, in step (c01) includes steps of: determining whether the ideal charge value is greater than or equal to a charge lower limit of the charging gun, and determining whether the ideal charge value is less than or equal to a charge upper limit of the charging gun.

In one embodiment, in step (c02) includes steps of: adjusting the ideal charge value to be equal to the charge lower limit when the ideal charge value is less than the charge lower limit, and adjusting the ideal charge value to be equal to the charge upper limit when the ideal charge value is greater than the charge upper limit.

In one embodiment, in step (c), the distribution margin value is equal to a difference between the distributed power and the ideal charge value.

In one embodiment, in step (e), evenly distributing the accumulated margin value for the charging piles that need to redistribute the output powers.

In one embodiment, in step (e), evenly in proportion distributing the accumulated margin value for the charging piles that need to redistribute the output powers according to rated output powers of the charging piles.

In one embodiment, before step (a) includes a step of: (x1) updating charge curve data of all charging piles.

In one embodiment, before step (a) includes a step of: (x2) determining whether the charging pile has completed charging; if the charging pile has completed charging, skipping the redistribution of the output power of the charging pile; if the charging pile has not completed charging, performing step (a).

Accordingly, the present disclosure has the following features and advantages: 1. The present disclosure provides a method of dynamically distributing output powers of charging piles according to charge curves. It is different from the existing technology, this method detects changes in the charging requirement of each electric vehicle according to the real-time charging power of each charging pile. Accordingly, the charging power of each charging pile can be dynamically adjusted to achieve the optimized utilization of the total output power of all charging piles; 2. The present invention actively monitors charging requirements by considering charging characteristics, and adjusts power according to actual conditions, thereby achieving automatic, dynamic, real-time and optimized power distribution of charging piles. This will greatly increase the performance and usage efficiency of the charging pile system and provide important support for large-scale electric vehicle charging in the future. Therefore, the method of the present disclosure has universal applicability and can be widely used in various electric vehicle charging infrastructures.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a schematic structural diagram of a power distribution system according to the present disclosure.
FIG. 2 is a schematic waveform diagram of a wasted margin power between a distributed charging power calculated by an algorithm and the actual charging power.
FIG. 3 is a flowchart of a method of dynamically distributing output powers of charging piles according to the present disclosure.
FIG. 4 is a flowchart of determining a charge power constant value in the method of dynamically distributing output powers of charging piles according to the present disclosure.
FIG. 5 is a flowchart including steps of the specific embodiment in FIG. 4.
FIG. 6 is a flowchart of determining an ideal charge value according to a charge specification of a charging gun in the method of dynamically distributing output powers of charging piles according to the present disclosure.
FIG. 7 is a schematic waveform diagram of the method of dynamically distributing output powers of charging piles according to a first embodiment of the present disclosure.
FIG. 8 is a schematic waveform diagram of the method of dynamically distributing output powers of charging piles according to a second embodiment of the present disclosure.
FIG. 9 is a schematic waveform diagram of the method of dynamically distributing output powers of charging piles according to a third embodiment of the present disclosure.

### DETAILED DESCRIPTION

Reference will now be made to the drawing figures to describe the present disclosure in detail. It will be understood that the drawing figures and exemplified embodiments of present disclosure are not limited to the details thereof.

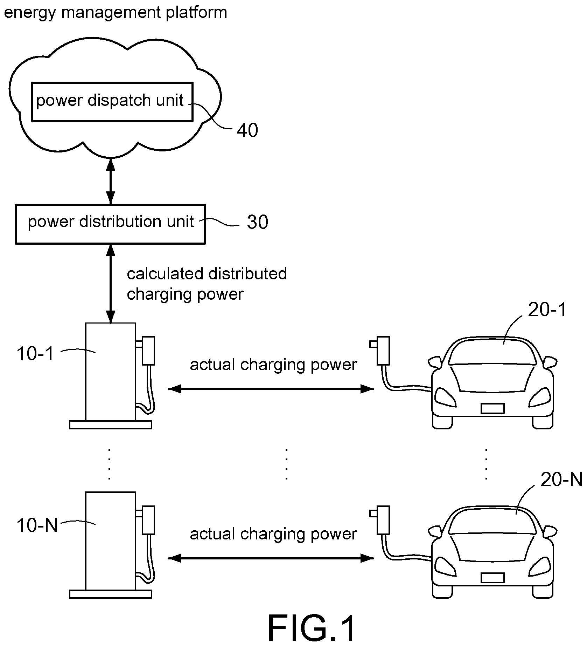

Please refer to FIG. 1, which shows a schematic structural diagram of a power distribution system according to the present disclosure. As shown in FIG. 1, the power distribution system includes an energy management platform, a power distribution unit 30, a plurality of charging piles (or charging stations) 10-1 to 10-N, and corresponding electric vehicles 20-1 to 20-N. The energy management platform is a cloud platform, which includes a power dispatch unit 40. The power dispatch unit 40 is communicated and interconnected with the power distribution unit 30. An algorithm can be used to distribute charging power between the power distribution unit 30 and the charging piles (or charging stations) 10-1 to 10-N. Actual charging power can be acquired between the charging piles (or charging stations) 10-1 to 10-N and the electric vehicles 20-1 to 20-N.

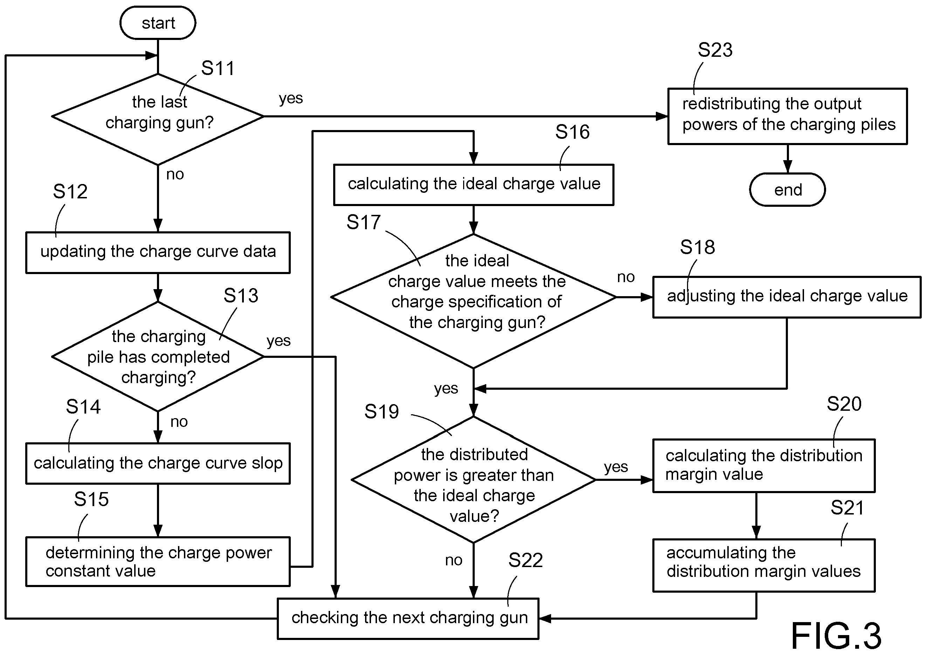

Please refer to FIG. 3, which shows a flowchart of a method of dynamically distributing output powers of charging piles according to the present disclosure. Each charging pile includes charging gun, and the method performs steps on all charging guns of the charging piles in sequence. First, determining whether the current charging gun is the last charging gun (step S11) in order to determine whether to confirm margin values of output powers of all charging guns. If the determination result is "yes" in step S 11, redistributing the output powers of the charging piles (step S23). As for the output power redistribution of the charging piles in step S23 will be further described in detail later.

If the determination result is "no" in step S11, updating charge curve data of all charging piles (step S12) since it means that the confirmation of the margin values of output powers of all charging guns has not been completed. By the updated charge curve data, charging piles that are providing charging output powers can provide dynamic and real-time charging information to optimize charging of electric vehicles. Incidentally, the "charge curve" is a graph showing the change of the charging power or current of the battery over time during the charging process of the charging gun to a load (such as an electric vehicle), which can display the charging speed and charging strategy changes of the battery during the charging process.

Afterward, determining whether the charging pile has completed charging (step S13). The so-called "charging completed" in this step means that the charging gun has completed charging the load (for example, an electric vehicle), that is, the charging gun no longer needs to output power. Incidentally, the "charging completed" broadly means that the electric vehicle has been charged, but the charging gun is still inserted into the electric vehicle or the charging gun is idle and does not charge the electric vehicle. If the determination result is "yes" in step S13, it means that the charging pile has completed charging, and then checking the next charging gun (step S22), and then returning to step S11 to determine whether the current charging gun is the last charging gun. Therefore, it is confirmed whether the current charging is completed, and if it is completed, the power distribution is skipped; if the charging is not completed, it is to confirm the slope of the charge curve.

If the determination result is "no" in step S13, it means that the charging pile has not completed charging, that is, the electric vehicle is in a charging state, and then calculating a charge curve slop (step S14). In step S14, calculating the charge curve slop within a certain time interval and calculating a current k value (more details later). In order to be generally applicable to charging piles of different specifications, not only the charging power (y-axis) is normalized, but also the time axis (x-axis) is normalized. Incidentally, the so-called "charge curve slope" means the rate at which the charging current (or power) changes with time during the charging process, and the charge curve slope helps to understand the changes in charging speed and charging process.

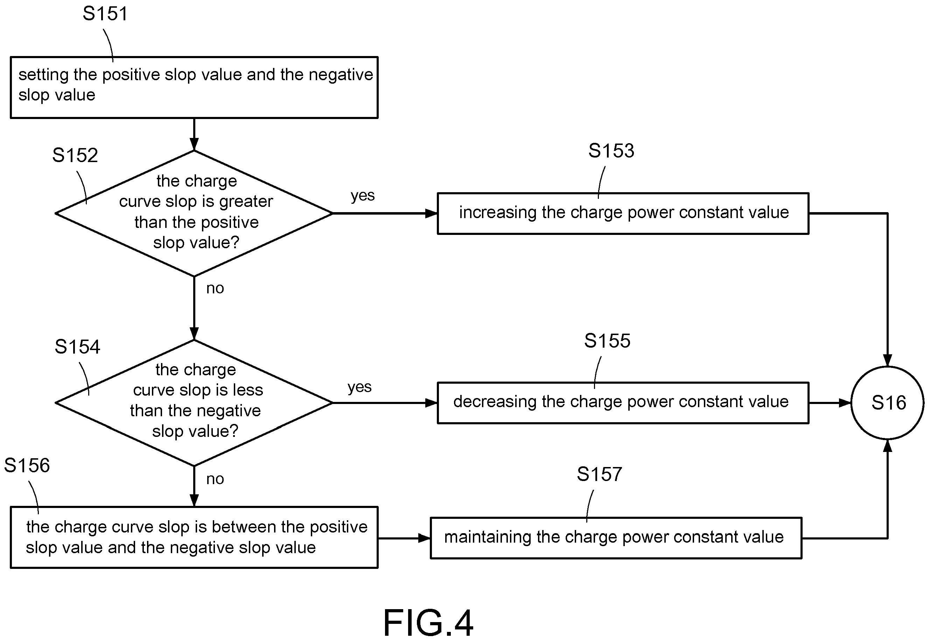

Afterward, determining a charge power constant value (step S15). In particular, the purpose of determining the charge power constant value is to use the k value to calculate the ideal charge value, and to confirm that the calculated ideal charge value must comply with the upper and lower limits of charging specifications of the charging gun. Please refer to FIG. 4, which shows a flowchart of determining a charge power constant value in the method of dynamically distributing output powers of charging piles according to the present disclosure. In step S15, specifically, first setting a positive slop value and a negative slop value (step S151), for example, the positive slop value is s, and the negative slop value is -s.

Afterward, determining whether the charge curve slop is greater than the positive slop value s (step S152). If the determination result is "yes" in step S 152, it means that the rising slop of the actual power during the charging of the electric vehicle is large enough, thereby increasing the charge power constant value (step S153) to increase the actual power of charging the electric vehicle, and then entering step S16, which is to calculate the ideal charge value. On the contrary, if the determination result is "no" in step S152, it means that the rising slop of the actual power during the charging of the electric vehicle is not large enough (still positive) or the rising slop of the actual power during the charging of the electric vehicle is negative (i.e., the rising slop is decreased), and therefore it is necessary to further determining whether the charge curve slop is less than the negative slop value -s (step S154).

If the determination result is "yes", it means that the falling slop of the actual power during the charging of the electric vehicle is large enough, thereby decreasing the charge power constant value (step S155) to decrease the actual power of charging the electric vehicle, and then enter step S16, which is to calculate the ideal charge value. On the contrary, if the determination result is "no" in step S154, it means that the rising slop of the actual power during the charging of the electric vehicle is not large enough or the falling slop of the actual power during the charging of the electric vehicle is not large enough, and therefore it is to determining that the charge curve slop is between the positive slop value s and the negative slop value -s (step S156). Afterward, maintaining the charge power constant value (step S157) to maintain the actual power of charging the electric vehicle, and then enter step S16, which is to calculate the ideal charge value.

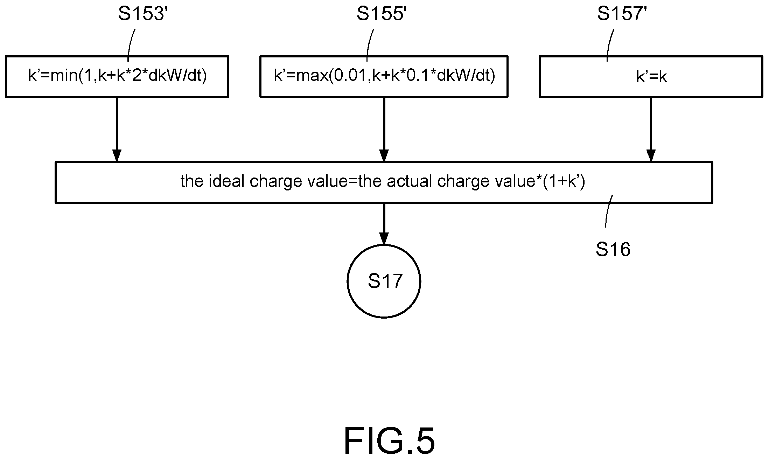

Please refer to FIG. 5, which shows a flowchart including steps of the specific embodiment in FIG. 4. It is to specifically describe the above steps of increasing the charge power constant value in step S153, decreasing the charge power constant value in step S155, and maintaining the charge power constant value in step 157, and which are marked in FIG. 5 as step S153', step S155', and step S157' respectively. When determining that the charge curve slop is greater than the positive slop value s, increasing the charge power constant value. In this embodiment, the reference basis is "k'=min(1,k+k*2*dkW/dt)", where k' is an updated charge power constant value, k is the original charge power constant value, dkW/dt is the charge curve slop. For example, if the original charge power constant value k=0.1, and the charge curve slop dkW/dt=2, which is greater than the assumed positive slop value s=0.5, the updated charge power constant value k' is the smaller of 1 and k+k*2*dkW/dt, that is, the updated charge power constant value k' is k+k*2*dkW/dt=0.5. Afterward, calculating the ideal charge value of the charging gun as an actual charge value of the charging gun*(1+k'). In other words, the ideal charge power of the charging gun may be increased by 50%. Afterward, step S17 is entered to determine whether the ideal charge value meets a charge specification of the charging gun.

Moreover, when determining that the charge curve slop is less than the negative slop value -s, decreasing the charge power constant value. In this embodiment, the reference basis is "k'=max(0.01,k+k*0.1*dkW/dt)", where k' is the updated charge power constant value, k is the original charge power constant value, dkW/dt is the charge curve slop. For example, if the original charge power constant value k=0.1, and the charge curve slop dkW/dt=-2, which is less than the assumed negative slop value -s=-2, the updated charge power constant value k' is the larger of 0.01 and k+k*0.1*dkW/dt, that is, the updated charge power constant value k' is k+k*0.1*dkW/dt=0.08. Afterward, calculating the ideal charge value of the charging gun as an actual charge value of the charging gun*(1+k'). In other words, the ideal charge power of the charging gun may be increased by only 8%. Afterward, step S17 is entered to determine whether the ideal charge value meets a charge specification of the charging gun.

Moreover, when determining that the charge curve slop is between the positive slop value s and the negative slop value -s, maintaining the charge power constant value. In this embodiment, the reference basis is "k'=k", where k' is the updated charge power constant value, k is the original charge power constant value. For example, if the original charge power constant value k=0.1, the updated charge power constant value k' is also 0.1. Afterward, calculating the ideal charge value of the charging gun as an actual charge value of the charging gun*(1+k'). In other words, the ideal charge power of the charging gun may be increased by 10%. Afterward, step S17 is entered to determine whether the ideal charge value meets a charge specification of the charging gun.

Please refer to FIG. 3 again, if the determination result is "yes" in step S17, it means that the ideal charge value calculated in step S16 meets the charge specifications of the charging gun, and therefore entering step S19 to determine whether a distributed power is greater than the ideal charge value. On the contrary, if the determination result is "no" in step S17, it means that the ideal charge value calculated in step S16 does not meet the charge specifications of the charging gun, and therefore it is necessary to further adjust the ideal charge value (step S18) so that the adjusted ideal charge value meets the charge specifications of the charging gun.

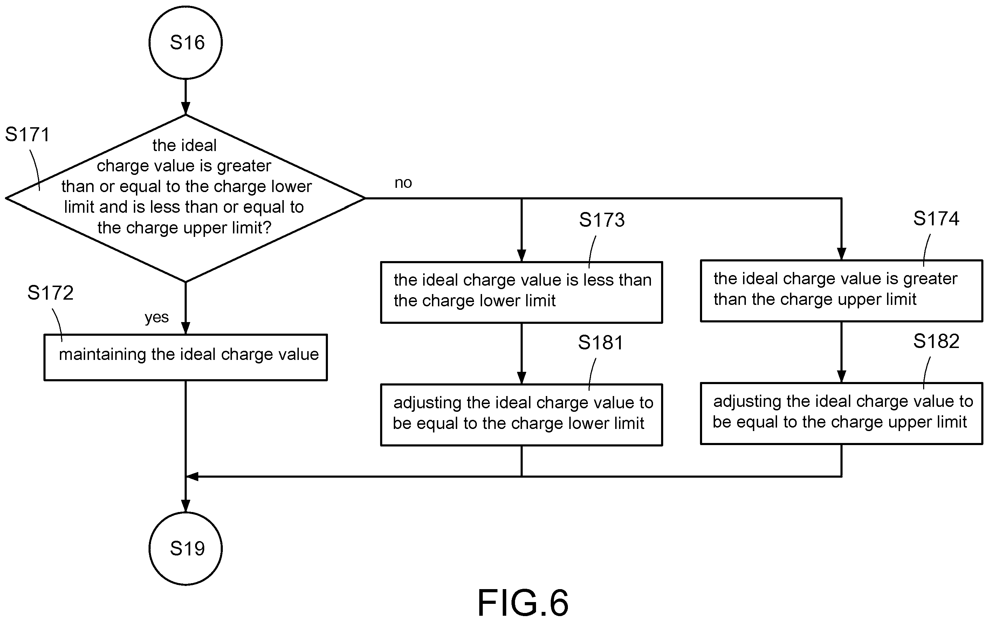

Please refer to FIG. 6, which shows a flowchart of determining an ideal charge value according to a charge specification of a charging gun in the method of dynamically distributing output powers of charging piles according to the present disclosure to specifically explain the relationship between the charging specifications of the charging gun and the adjusted ideal charge value. First, determining whether the ideal charge value is greater than or equal to a charge lower limit of the charging gun and is less than or equal to a charge upper limit of the charging gun (step S171). If the determination result is "yes" in step S171, it means that the ideal charge value calculated in step S16 meets the charge specifications of the charging gun, and therefore the ideal charge value calculated in step S16 is maintained (step S172), and then entering step S19.

On the contrary, if the determination result is "no" in step S171, it means that the calculated ideal charge value is either greater than the charge upper limit of the charging gun, or less than the charge lower limit of the charging gun, and therefore the ideal charge value does not meet the charge specification of the charging gun. Furthermore, if determining that the ideal charge value is less than the charge lower limit of the charging gun (step S173), adjusting (setting) the ideal charge value to be equal to the charge lower limit (step S181), that is, taking the charge lower limit of the charging gun as the ideal charge value, and then entering step S19. On the contrary, if determining that the ideal charge value is greater than the charge upper limit of the charging gun (step S174), adjusting (setting) the ideal charge value to be equal to the charge upper limit (step S182), that is, taking the charge upper limit of the charging gun as the ideal charge value, and then entering step S19. Accordingly, it is to ensure that the distributed power falls within the charge lower limit and the charge upper limit of the charging gun.

Please refer to FIG. 3 again, if the determination result is "no" in step S19, it means that the distributed power of the output power of the charging gun is less than or equal to the ideal charge value, that is, there is no excess (redundant) output power available for additional accumulation, and then entering step S22 to check the next charging gun, and then returning to step S11 and subsequent steps. On the contrary, if the determination result is "yes" in step S19, it means that the distributed power of the output power of the charging gun is greater than the ideal charge value, that is, there is excess (redundant) output power available for additional accumulation, and therefore calculating a distribution margin value (step S20). In step S20, the distribution margin value is equal to a difference between the distributed power and the ideal charge value. If the distributed power of the currently detected (checked) charging gun is Pd, and the ideal charge value is Pi, the distribution margin value Pm of the charging gun is: Pm=Pd-Pi. For example, if the distributed power Pd is 50kW and the ideal charge value Pi is 35kW, the distribution margin value Pm will be 15kW, that is, there is 15kW of redundant power available for additional accumulation and use.

Afterward, accumulating the distribution margin values (step S21). In step S21, acquiring an accumulated margin value by accumulating the distribution margin values of the detected charging guns. For example, it is assumed that if the charging pile has a total of five charging guns, and the fifth charging gun is currently detected. If the cumulated margin value of the first four charging guns is 85kW, and the distribution margin value of the fifth charging gun is 15kW, the new cumulated margin value acquired is 100kW, and then entering step S22 to check the next charging gun, and then returning to step S11 and subsequent steps.

If the determination result is "yes" in step S11, redistributing the output powers of the charging piles (step S23). For the redistribution of the output powers of the charging piles in step S23, one embodiment is: evenly distributing the accumulated margin value for the charging piles that need to redistribute the output powers. The "charging piles that need to redistribute the output powers" broadly means all charging piles are still charging, or narrowly means all charging piles that require a lot of charging power in the initial charging stage, and therefore it is to evenly distribute the accumulated margin value for such charging piles. For the redistribution of the output powers of the charging piles in step S23, another embodiment is: evenly in proportion distributing the accumulated margin value for the charging piles that need to redistribute the output powers according to rated output powers of the charging piles. Compared with the previous embodiment, in this embodiment, not only the number of charging piles is used as a consideration for distributing the output powers, instead, it further redistributes the output powers according to the required rated output powers of the charging piles, and distributes proportionally the accumulated margin value. Accordingly, during the charging process, the system dynamically adjusts according to the actual charging power and the preset distributed power to ensure that the actual power is as close as possible to the expected distributed power.

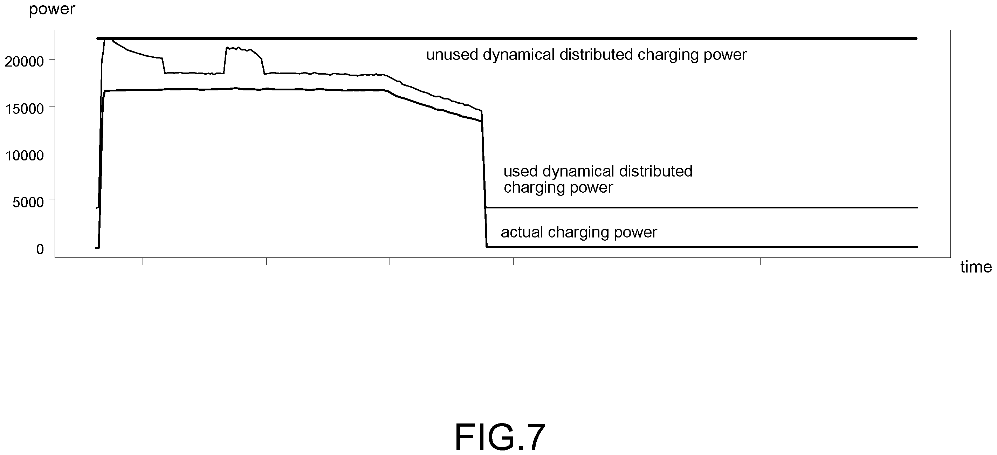

In the following, the waveform diagrams shown in FIG. 7, FIG. 8, and FIG. 9 will be used as explanations. Please refer to FIG. 7, which shows a schematic waveform diagram of the method of dynamically distributing output powers of charging piles according to a first embodiment of the present disclosure. As shown in FIG. 7, the difference between the unused dynamical distributed charging power and the used dynamical distributed charging power is overdistribution (that is, the distributed power of the output power of the charging is greater than the ideal charge value). Therefore, excess unnecessary output power can be recovered and then can be distributed to other charging piles in need. The range between the unused dynamical distributed charging power and the used dynamical distributed charging power is the margin that can be redistributed. Incidentally, in FIG. 7, the used dynamical distributed charging power detects a sudden increase in power in the early stage of charging, but then returns to a stable state immediately, and therefore projections appear in the used dynamical distributed charge curve.

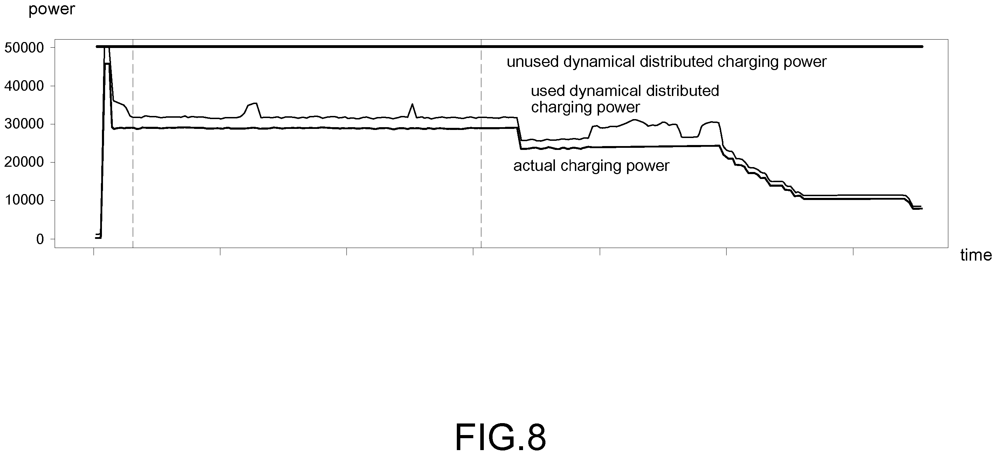

Please refer to FIG. 8, which shows a schematic waveform diagram of the method of dynamically distributing output powers of charging piles according to a second embodiment of the present disclosure. As shown in FIG. 8, it can be seen that the charging process of the electric vehicle is mainly divided into three stages. The first stage: initial charging and loading stage. This stage is when the electric vehicle just starts charging, and the charging power will increase in a short period of time. The maximum value is the upper limit of the charging specification of the charging gun, which depends on the limitations of the electric vehicle itself or the current SoC (state of charge) level when the battery is being charged. The second stage: stable charging stage. After the initial charging and loading, the output power of the charging gun will stabilize and continue charging. The third stage: decreased charging power stage. After charging for a period of time, as the battery SoC level of the electric vehicle increases, the charging power will begin to decrease in a stepwise manner due to battery characteristics.

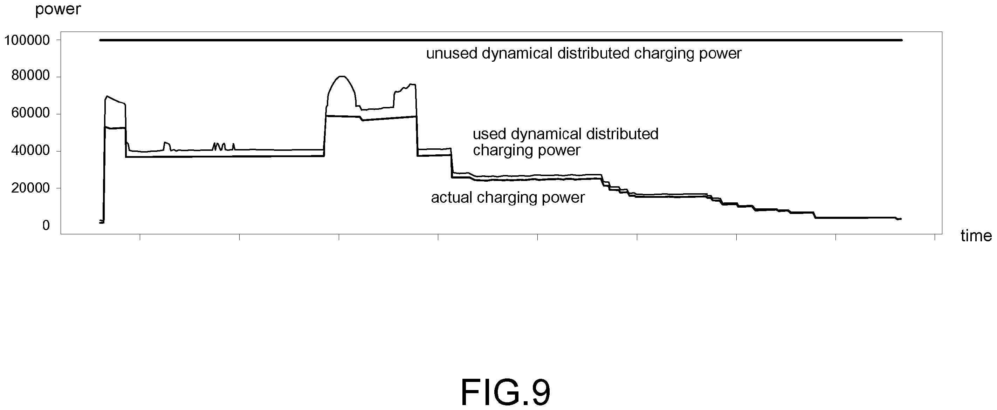

Please refer to FIG. 9, which shows a schematic waveform diagram of the method of dynamically distributing output powers of charging piles according to a third embodiment of the present disclosure. Since the power output of the charging gun is controlled by setting the upper limit of its output, for example: if the charging power of charging gun is set to 100kW, the maximum output of the charging gun will be limited to less than 100kW, even if the electric vehicle may have a low battery SoC level and can be charged at 120kW, it can only be charged and limited to 100kW. Therefore, without an effective method to dynamically adjust charging power, the entire charging process will become inefficient. As shown in FIG. 9, it can be seen that the dynamic power distribution method takes into account the characteristics of the charging gun, and there are three main stages in the entire charging process. The first stages: increased power stage. In order to prevent the load-upgrading process from being interrupted by the upper limit of the power setting, the algorithm will continuously increase the charging power setting to maximize the load-upgrading process. The second stage: stable power stage. During the power stabilization period, the algorithm will set the charging power to be higher than the actual power for temporary load-upgrading. If a load-upgrading signal is detected during the charging process, the load-upgrading power will also be adjusted (surges as shown in FIG. 9). The third stage: decreased power stage. When the decreased power is detected, the algorithm will adjust the charging power according to the power falling slope to be close to the actual power.

In summary, the present disclosure has the following features and advantages:
1. The present disclosure provides a method of dynamically distributing output powers of charging piles according to charge curves. It is different from the existing technology, this method detects changes in the charging requirement of each electric vehicle according to the real-time charging power of each charging pile. Accordingly, the charging power of each charging pile can be dynamically adjusted to achieve the optimized utilization of the total output power of all charging piles.
2. The present invention actively monitors charging requirements by considering charging characteristics, and adjusts power according to actual conditions, thereby achieving automatic, dynamic, real-time and optimized power distribution of charging piles. This will greatly increase the performance and usage efficiency of the charging pile system and provide important support for large-scale electric vehicle charging in the future. Therefore, the method of the present disclosure has universal applicability and can be widely used in various electric vehicle charging infrastructures.

## Claims

1. A method of dynamically distributing output powers of charging piles (10-1 to 10-N), each charging pile (10-1 to 10-N) at least comprising a charging gun, the method configured to perform steps on all charging guns of the charging piles (10-1 to 10-N) in sequence, and **characterized in that** the method comprising steps of:
(a) calculating a charge curve slop,
(b) calculating an ideal charge value (Pi) according to a range of the charge curve slop,
(c) calculating a distribution margin value if a distributed power (Pd) is greater than the ideal charge value (Pi),
(d) performing steps (a) to (c), and acquiring an accumulated margin value by accumulating the distribution margin values (Pm) after completing the calculation of the distribution margin value (Pm) of each charging gun, and
(e) redistributing the output powers of the charging piles (10-1 to 10-N).

2. The method of dynamically distributing output powers of charging piles (10-1 to 10-N) as claimed in claim 1, wherein in step (b) comprising a step of:
(b') deciding a charge power constant value (k) according to the range of the charge curve slop, and calculating the ideal charge value (Pi) according to the charge power constant value (k).

3. The method of dynamically distributing output powers of charging piles (10-1 to 10-N) as claimed in claim 2, wherein in step (b') comprising steps of:
(b1) setting a positive slop value (s) and a negative slop value (-s),
(b2) increasing the charge power constant value (k') when the charge curve slop is greater than the positive slop value (s),
(b3) decreasing the charge power constant value (k') when the charge curve slop is less than the negative slop value (-s), and
(b4) maintaining the charge power constant value (k') when the charge curve slop is between the positive slop value (s) and the negative slop value (-s).

4. The method of dynamically distributing output powers of charging piles (10-1 to 10-N) as claimed in claim 3, wherein
in step (b2), the charge power constant value (k') is: k'=min(1,k+k*2*dkW/dt),
in step (b3), the charge power constant value (k') is: k'=max(0.01,k+k*0.1 *dkW/dt), and
in step (b4), the charge power constant value (k') is: k'=k,
where k' is an updated charge power constant value (k'), k is the original charge power constant value (k), dkW/dt is the charge curve slop.

5. The method of dynamically distributing output powers of charging piles (10-1 to 10-N) as claimed in claim 4, wherein in step (b), the ideal charge value (Pi) is: Pi=Pa*(1+k'),
where Pi is the ideal charge value (Pi), Pa is an actual charge value of the charging gun.

6. The method of dynamically distributing output powers of charging piles (10-1 to 10-N) as claimed in claim 1, wherein before step (c) further comprising steps of:
(c01) determine whether the ideal charge value (Pi) meets a charge specification of the charging gun,
(c02) adjusting the ideal charge value (Pi) when the ideal charge value (Pi) does not meet the charge specification of the charging gun, and
(c03) maintaining the ideal charge value (Pi) when the ideal charge value (Pi) meets the charge specification of the charging gun.

7. The method of dynamically distributing output powers of charging piles (10-1 to 10-N) as claimed in claim 6, wherein in step (c01) comprising steps of:
determining whether the ideal charge value (Pi) is greater than or equal to a charge lower limit of the charging gun, and
determining whether the ideal charge value (Pi) is less than or equal to a charge upper limit of the charging gun.

8. The method of dynamically distributing output powers of charging piles (10-1 to 10-N) as claimed in claim 7, wherein in step (c02) comprising steps of:
adjusting the ideal charge value (Pi) to be equal to the charge lower limit when the ideal charge value (Pi) is less than the charge lower limit, and
adjusting the ideal charge value (Pi) to be equal to the charge upper limit when the ideal charge value (Pi) is greater than the charge upper limit.

9. The method of dynamically distributing output powers of charging piles (10-1 to 10-N) as claimed in claim 1, wherein in step (c), the distribution margin value (Pm) is equal to a difference between the distributed power (Pd) and the ideal charge value (Pi).

10. The method of dynamically distributing output powers of charging piles (10-1 to 10-N) as claimed in claim 1, wherein in step (e), evenly distributing the accumulated margin value for the charging piles (10-1 to 10-N) that need to redistribute the output powers.

11. The method of dynamically distributing output powers of charging piles (10-1 to 10-N) as claimed in claim 1, wherein in step (e), evenly in proportion distributing the accumulated margin value for the charging piles (10-1 to 10-N) that need to redistribute the output powers according to rated output powers of the charging piles (10-1 to 10-N).

12. The method of dynamically distributing output powers of charging piles (10-1 to 10-N) as claimed in claim 1, wherein before step (a) comprising a step of:
(x1) updating charge curve data of all charging piles (10-1 to 10-N).

13. The method of dynamically distributing output powers of charging piles (10-1 to 10-N) as claimed in claim 1, wherein before step (a) comprising a step of:
(x2) determining whether the charging pile (10-1 to 10-N) has completed charging; if the charging pile (10-1 to 10-N) has completed charging, skipping the redistribution of the output power of the charging pile (10-1 to 10-N); if the charging pile (10-1 to 10-N) has not completed charging, performing step (a).
